# EUROPÄISCHE PATENTSCHRIFT

(11) **EP 2 574 876 B1**
(45) Veröffentlichungstag und Bekanntmachung des Hinweises auf die Patenterteilung: **15.11.2017**
(21) Anmeldenummer: 12006383.9
(22) Anmeldetag: 11.09.2012
(51) Int. Cl.: G01B 11/25

(54) **Verfahren und Vorrichtung zum Bestimmen der 3D-Koordinaten eines Objekts**
Method and device for determining the 3D coordinates of an object
Procédé et dispositif destinés à déterminer les coordonnées 3D d'un objet

(30) Priorität: 30.09.2011 DE 102011114674
(43) Veröffentlichungstag der Anmeldung: 03.04.2013
(73) Patentinhaber: Carl Zeiss Optotechnik GmbH, 83115 Neubeuern (DE)
(72) Erfinder: Daxauer, Herbert, 6344 Walchsee (AT); Mayer, Thomas, 83059 Kolbermoor (DE); Steinbichler, Marcus, 83115 Neubeuern (DE); Basel, Markus, 83064 Raubling (DE)
(74) Vertreter: Zinnecker, Armin

(56) Entgegenhaltungen:
- EP-A1- 2 034 269
- DE-A1-102009 032 771
- US-A1- 2010 134 598

## Beschreibung

Die Erfindung betrifft ein Verfahren zum Bestimmen der 3D-Koordinaten eines Objekts und eine Vorrichtung zur Durchführung eines derartigen Verfahrens.

Bei dem Verfahren wird ein Streifenmuster auf das Objekt projiziert. Das von dem Objekt reflektierte Licht wird aufgenommen und ausgewertet. Die Vorrichtung zur Durchführung eines derartigen Verfahrens umfaßt einen Projektor zum Projizieren eines Musters auf das Objekt, eine Kamera zum Aufnehmen des Objekts und eine Auswerteeinrichtung zum Auswerten der aufgenommenen Aufnahmen.

Verfahren und Vorrichtungen dieser Art sind bereits bekannt, beispielsweise aus der DE 10 2006 048 234 A1 und der DE 10 2007 042 963 A1. Bei diesen Verfahren kann ein Streifenmuster auf das Objekt projiziert werden. Üblicherweise wird das Streifenmuster im Verfahren der Weißlicht-Streifenprojektion auf das Objekt projiziert, also mit weißem Licht.

Da zur Bestimmung der 3D-Koordinaten des Objekts in der Regel eine einzige Aufnahme nicht ausreicht, um die Meßanforderungen zu erfüllen und/oder das Objekt vollständig zu erfassen, ist es erforderlich, das Musterprojektionssystem im Raum an verschiedenen Aufnahmepositionen zu positionieren und die dort hergestellten Aufnahmen in ein gemeinsames, übergeordnetes Koordinatensystem, das auch als absolutes Koordinatensystem bezeichnet werden kann, zu überführen. Dieser häufig als "globale Registrierung" bezeichnete Prozeß erfordert eine hohe Genauigkeit.

Bei einem vorbekannten Verfahren dieser Art werden Aufnahmen hergestellt, die sich teilweise überlappen. Diese Aufnahmen können über eine Optimierung der Überlappungsbereiche zueinander orientiert werden. Das Verfahren ist allerdings bei größeren Objekten mit wenig Oberflächenstruktur möglicherweise nicht hinreichend genau.

Ferner sind Verfahren bekannt, bei denen Referenzmarken verwendet werden, die auf und/oder neben dem Objekt und/oder auf einer oder mehreren das Objekt umgebenden Kulissen angebracht werden. Die Referenzmarken werden zunächst eingemessen. Dies erfolgt vorzugsweise nach dem Verfahren der Photogrammetrie. Mit Hilfe der Referenzmarken, die durch ein Musterprojektionssystem, insbesondere ein Streifenprojektionssystem erfaßt werden, können die verschiedenen Aufnahmen des Objekts auf die eingemessenen Punkte transformiert werden, so daß eine globale Registrierung möglich ist.

Aus der EP 2 273 229 A1 ist ein Verfahren bekannt, bei dem zur Bestimmung der 3D-Koordinaten eines Objekts ein Streifenmuster von einem Projektor auf das Objekt projiziert wird. Das von dem Objekt reflektierte Streifenmuster wird von einer Kamera aufgenommen, die eine Optik und einen Flächensensor, insbesondere einen CCD-Sensor oder CMOS-Sensor umfaßt. Der Projektor und die Kamera bilden ein Streifenprojektionssystem. In der Nähe des Objekts sind mehrere Referenzkulissen angeordnet, die jeweils mehrere Referenzmarken aufweisen. Die Referenzkulissen werden zunächst vermessen. Anschließend werden die 3D-Koordinaten des Objekts durch das Streifenprojektionssystem bestimmt.

Aus der WO 2004/011876 A1 ist eine Vorrichtung nach dem Oberbegriff des Anspruchs 8 bekannt. Die Vorrichtung umfaßt einen Projektor zum Projizieren eines Musters auf das Objekt, eine Kamera zum Aufnehmen des Objekts und eine Auswerteeinrichtung zum Auswerten der Aufnahmen des Objekts. Die Vorrichtung umfaßt ferner eine Projektionseinrichtung zum Projizieren von Referenzmarken auf das Objekt und eine weitere Kamera zum Aufnehmen der Referenzmarken.

Aus der DE 195 36 297 A1 ist ein Verfahren zur geometrischen Kalibrierung von optischen 3D-Sensoren zur dreidimensionalen Vermessung von Objekten bekannt, bei dem ein Muster auf das Objekt projiziert und das von dem Objekt reflektierte Licht von einer Kamera aufgenommen und ausgewertet wird. Im Bildfeld der Kamera befindet sich eine Kalibriereinrichtung mit wenigstens vier kalibrierten und einer Vielzahl weiterer Signalmarken oder Referenzmarken, die von der Kamera aufgenommen werden.

Aus der DE 10 2005 051 020 A1 ist ein Verfahren zur dreidimensionalen Digitalisierung von Körpern bekannt, bei dem eine Kamera um den zu digitalisierenden Körper herum bewegt wird. Der zu digitalisierende Körper ist von einer Vielzahl von photogrammetrisch auswertbaren Marken umgeben. Um den Körper herum sind ferner mehrere Lichtmusterprojektoren ortsfest angebracht, die nacheinander eingeschaltet werden.

Die US 2010/0092041 A1 offenbart ein Verfahren zur dreidimensionalen Formbestimmung eines Objekts, bei dem ein Muster auf das Objekt projiziert wird und das von dem Objekt reflektierte Licht von einer Kamera aufgenommen und ausgewertet wird. Die Kamera erfaßt ferner eine Referenzmarke neben dem Objekt.

Aus der DE-A-10 2009 032 771 ist ein Verfahren zur Bestimmung der 3D-Koordinaten eines Objekts nach dem Oberbegriff des Anspruchs 1 bekannt.

Die US-A-2010/0134598 zeigt ein ähnliches Verfahren.

Aus der prioritätsälteren, nicht vorveröffentlichten DE 10 2011 011 360 ist ein weiteres Verfahren zum Bestimmen der 3D-Koordinaten eines Objekts bekannt.

Aufgabe der Erfindung ist es, ein verbessertes Verfahren der eingangs angegebenen Art und eine verbesserte Vorrichtung der eingangs angegebenen Art vorzuschlagen.

Bei einem Verfahren der eingangs angegebenen Art wird diese Aufgabe durch die Merkmale des Anspruchs 1 gelöst. Von einer einzigen Referenzkamera werden Referenzmarken auf und/oder neben dem Objekt aufgenommen. Die Referenzkamera hat ein größeres Gesichtsfeld als die Kamera. Die Referenzkamera ist mit der Kamera oder mit einem 3D-Sensor verbunden, der den Projektor und die Kamera umfaßt.
Die Referenzmarken können auf dem Objekt bereits vorhanden sein. Insbesondere können charakteristische Bereiche des Objekts als Referenzmarken verwendet werden. Stattdessen oder zusätzlich können Referenzmarken auf dem Objekt angebracht werden und/oder neben dem Objekt positioniert werden. Insbesondere können die Referenzmarken verwendet werden, die in der DE 10 2009 032 262 A1 beschrieben sind, auf die hiermit ausdrücklich Bezug genommen wird. Es können also Referenzmarken verwendet werden, die in sich codiert sind, und/oder Referenzmarken, die nicht in sich codiert sind, die aber derart räumlich zueinander angeordnet sind, daß diese räumliche Anordnung eine Codierung beinhaltet. Mehrere Referenzmarken können zu einer oder mehreren Referenzkulissen zusammengefaßt sein.

Es ist möglich, mit der Kamera mehrere Aufnahmen von dem Objekt zu machen. Mehrere oder alle Aufnahmen können sich überlappen. Die Zusammensetzung der einzelnen Aufnahmen in einem übergeordneten Koordinatensystem kann mit Hilfe der Photogrammetrie erfolgen. Hierzu werden die Referenzmarken von der Referenzkamera vermessen.

Bei einer Vorrichtung der eingangs angegebenen Art wird die Aufgabe der Erfindung durch die Merkmale des Anspruchs 8 gelöst. Die Vorrichtung umfaßt eine einzige Referenzkamera zum Aufnehmen von Referenzmarken auf und/oder neben dem Objekt. Die Referenzkamera hat ein größeres Gesichtsfeld als die Kamera. Die Referenzkamera ist mit der Kamera oder mit einem 3D-Sensor verbunden, der den Projektor und die Kamera umfaßt.

Erfindungsgemäß wird ein Streifenmuster auf das Objekt projiziert. Das Streifenmuster kann durch ein bildgebendes Element auf das Objekt projiziert werden, insbesondere durch ein Dia oder durch einen digitalen Mustergenerator, insbesondere ein Flüssigkristalldisplay wie beispielsweise ein DLP-Display, ein LCD-Display und/oder ein LCOS-Display.

Die Kamera kann eine Optik und einen flächenhaften Sensor umfassen, insbesondere einen CCD-Sensor und/oder einen CMOS-Sensor. Die Auswerteeinrichtung kann einen Rechner, insbesondere einen PC, umfassen oder daraus bestehen.

Die aufgenommenen Aufnahmedaten können in einem Kameraspeicher zwischengespeichert werden. Sie können vor oder nach der Zwischenspeicherung oder ohne Zwischenspeicherung weitergeleitet werden.

Der Projektor und die Kamera können baulich in einem sogenannten 3D-Sensor integriert sein. Der 3D-Sensor umfaßt den Projektor und die Kamera.

Durch die Erfindung wird es ermöglicht, eine vorhandene Vorrichtung zum Bestimmen der 3D-Koordinaten eines Objekts nach dem Oberbegriff des Anspruchs 8 auf einfache Weise zu ergänzen, um mit dieser Vorrichtung die 3D-Koordinaten eines Objekts bestimmen zu können, das größer ist als das Gesichtsfeld der Kamera. Ferner ist es möglich, mehrere Kameras vorzusehen. Beispielsweise kann eine sogenannte Stereokamera verwendet werden, also eine Kombination von zwei Kameras. Es ist allerdings auch möglich, mehr als zwei Kameras vorzusehen. Durch mehr als eine Kamera kann die Zuordnung der von den Kameras aufgenommenen Bildpunkte zu den projizierten Linien verbessert werden.

Vorteilhafte Weiterbildungen sind in den Unteransprüchen beschrieben.

Vorteilhaft ist es, wenn die Vorrichtung einen Projektor zum Projizieren der Referenzmarken auf das Objekt umfasst.

Nach einer weiteren vorteilhaften Weiterbildung erfolgen die Aufnahmen der Kamera und die Aufnahmen der Referenzkamera zeitlich versetzt. Stattdessen oder zusätzlich können die Aufnahmen der Kamera und die Aufnahmen der Referenzkamera gleichzeitig erfolgen.

Vorteilhaft ist es, wenn mehrere Aufnahmen der Kamera zusammengesetzt werden. Zum Zusammensetzen der Aufnahmen können zusätzlich Matching-Verfahren angewendet werden.

Eine weitere vorteilhafte Weiterbildung ist dadurch gekennzeichnet, daß in einem ersten Meßdurchlauf die Positionen der Referenzmarken erfaßt und gespeichert werden. Der erste Meßdurchlauf kann ohne Vermessen (Bestimmen der 3D-Koordinaten) des Objekts durchgeführt werden. Es ist allerdings auch möglich, bei diesem ersten Meßdurchlauf auch ein Objekt zu vermessen. Die erfaßten Positionen der Referenzmarken können in das übergeordnete Koordinatensystem transformiert werden. Die erfaßten und/oder transformierten Positionen können gespeichert werden.

Es kann vorteilhaft sein, wenn die 3D-Koordinaten eines Objekts auf der Grundlage von gespeicherten Positionen der Referenzmarken bestimmt werden. Dies ist insbesondere dann vorteilhaft, wenn in einem ersten Meßdurchlauf die Positionen der Referenzmarken erfaßt und gegebenenfalls transformiert und gespeichert werden. Es ist allerdings auch möglich, die 3D-Koordinaten eines Objekts auf der Grundlage von Positionen der Referenzmarken zu bestimmen, die bereits abgespeichert worden sind. Durch die Verwendung der gespeicherten Positionen der Referenzmarken kann Meßzeit eingespart werden. Es kann allerdings auch vorteilhaft sein, die Positionen der Referenzmarken bei einer oder jeder Bestimmung der 3D-Koordinaten eines Objekts erneut zu bestimmen.

Ein Ausführungsbeispiel der Erfindung wird nachstehend anhand der beigefügten Zeichnung im einzelnen erläutert. In der Zeichnung zeigt
- Fig. 1: eine Vorrichtung zum Bestimmen der 3D-Koordinaten eines Objekts mit einem Projektor, einer Kamera und einer Referenzkamera und
- Fig. 2: eine abgewandelte Vorrichtung gemäß Fig. 1.

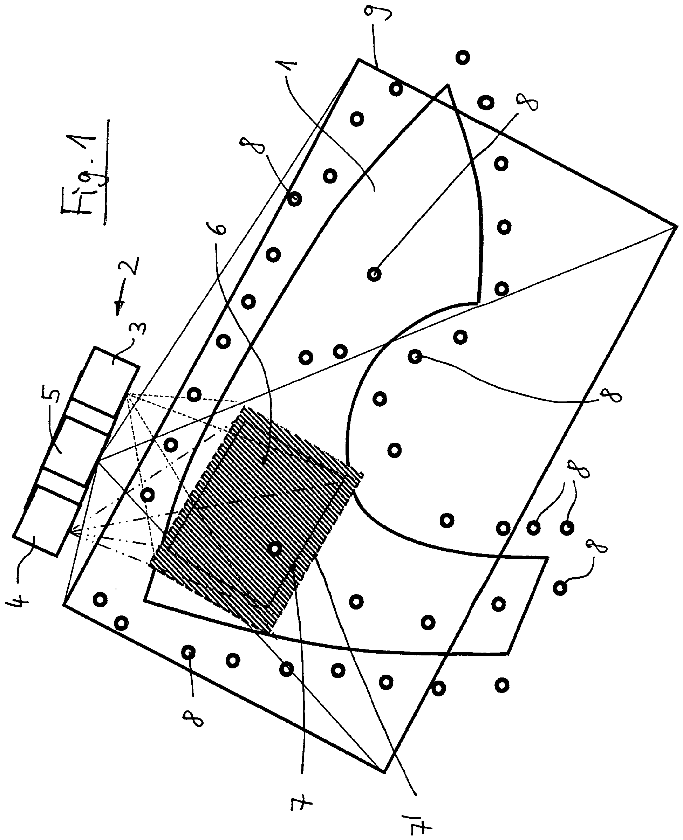

Fig. 1 zeigt eine Vorrichtung zum Bestimmen der 3D-Koordinaten eines Objekts 1, nämlich eines Kotflügels eines Kraftfahrzeugs. Die Vorrichtung umfaßt einen 3D-Sensor 2, der einen Projektor 3 und eine Kamera 4 umfaßt. Die Vorrichtung umfaßt ferner eine Referenzkamera 5, die mit dem 3D-Sensor 2 verbunden ist. Im Ausführungsbeispiel befindet sich die Referenzkamera 5 zwischen dem Projektor 3 und der Kamera 4.

Von dem Projektor 3 wird ein Muster, nämlich ein Streifenmuster 6, auf das Objekt 1 projiziert. Das von dem Objekt 1 im Bereich des Streifenmusters 6 reflektierte Licht wird von der Kamera 4 aufgenommen.

Die Aufnahme der Kamera 4 wird an eine Auswerteeinrichtung (in der Zeichnung nicht dargestellt) weitergeleitet, von der sie ausgewertet wird. Aus der Aufnahme können die 3D-Koordinaten des Objekts 1 in dem Gesichtsfeld 7 der Kamera 4 bestimmt werden. Der Umriß 7' des Streifenmusters 6 ist größer als das Gesichtsfeld 7 der Kamera 4. Der Umriß 7' umschließt das Gesichtsfeld 7 allseitig. Die Kamera 4 weist einen Flächensensor auf, der das Objekt 1 vorzugsweise in dem gesamten Gesichtsfeld 7 der Kamera 4 aufnimmt.

Auf das Objekt 1 und auf die Umgebung des Objekts 1 werden durch einen weiteren Projektor (in der Zeichnung nicht dargestellt) Referenzmarken 8 projiziert. Von der Referenzkamera 5 werden die Referenzmarken, die sich innerhalb des Gesichtsfelds 9 der Referenzkamera 5 befinden, aufgenommen.

Das Gesichtsfeld 9 der Referenzkamera 5 ist größer als das Gesichtsfeld 7 der Kamera 4. Ferner umschließt das Gesichtsfeld 9 der Referenzkamera 5 das Gesichtsfeld 7 der Kamera 4 allseitig. Von der Referenzkamera 5 werden die Referenzmarken 8, die sich in ihrem Gesichtsfeld 9 befinden, aufgenommen. Daraus können die Position und die Orientierung der Referenzkamera 5 bestimmt werden. Nachdem der Teil des Objekts 1, der sich innerhalb des Gesichtsfelds 7 der Kamera 4 befindet, von der Kamera 4 aufgenommen worden ist, wird die Vorrichtung, umfassend den Projektor 3, die Kamera 4 und die Referenzkamera 5, an einer anderen Stelle positioniert. Diese Positionierung erfolgt derart, daß sich das Gesichtsfeld 7 der Kamera 4 an einer anderen Stelle des Objekts 1 befindet, vorzugsweise an einer Stelle neben dem ursprünglichen Gesichtsfeld 7. Das Gesichtsfeld, das die Kamera 4 in ihrer neuen Position abdeckt, kann sich mit dem ursprünglichen Gesichtsfeld 7 der Kamera 4 überlappen. Dadurch, daß das Gesichtsfeld 9 der Referenzkamera 5 größer ist als das Gesichtsfeld 7 der Kamera 4, ist gewährleistet, daß die Referenzkamera 5 in der ursprünglichen Position und in der neuen Position eine ausreichende Anzahl von Referenzmarken 8 erfassen kann. Die Anzahl und die Positionen der Referenzmarken 8 sind derart gewählt, daß eine ausreichende Anzahl von Referenzmarken 8 vorhanden ist, die die Referenzkamera 5 in beiden Positionen erfassen kann. Hierdurch wird eine globale Registrierung der Aufnahmen der Kamera 4 und damit der 3D-Koordinaten des Objekts 1 gewährleistet. Dadurch, daß der Projektor 2, der das Streifenmuster 6 auf das Objekt 1 projiziert, mit der Kamera 4 und der Referenzkamera 6 verbunden ist, wird das Streifenmuster 6 bei einer Bewegung der Vorrichtung, die den Projektor 3, die Kamera 4 und die Referenzkamera 5 umfaßt, mitbewegt.

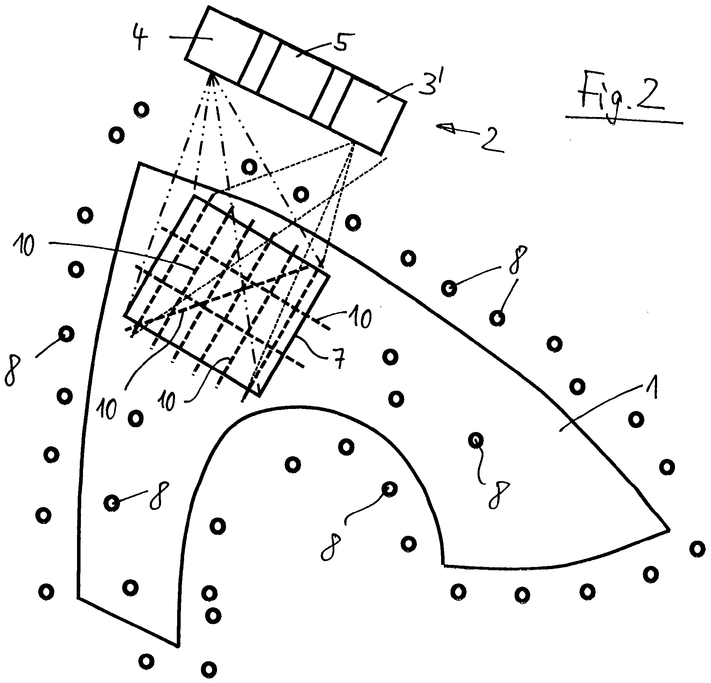

Fig. 2 zeigt eine Vorrichtung, bei der ein Projektor 3' vorhanden ist, der Laserlinien 10 auf das Objekt 1 projiziert. Einige Laserlinien 10 verlaufen parallel zur Längsseite des Gesichtsfelds 7 der Kamera 4. Weitere Laserlinien 10 verlaufen parallel zur Schmalseite des Gesichtsfelds 7 der Kamera 4. Eine weitere Laserlinie 10 verläuft im Winkel zu den Rändern des Gesichtsfelds 7 der Kamera 4.

Die Größe des Gesichtsfelds der Kamera 4 und/oder der Referenzkamera 5 kann durch die Brennweite der zugehörigen Optik festgelegt werden. Stattdessen oder zusätzlich kann das Gesichtsfeld durch die Sensorgröße festgelegt werden. Die Aufnahmen der Referenzkamera 5 können an ein Auswertesystem, insbesondere einen PC, übertragen werden. Daraus können rechnerisch die 3D-Koordinaten der Referenzmarken 8 berechnet werden. Auf diese Weise können Photogrammetriepunkte gewonnen werden. Im Anschluß können diese Photogrammetriepunkte und die durch die Photogrammetrie errechneten Positionen der Referenzkamera 5 und der Kamera 4 zum genauen Ausrichten und Registrieren der Daten, also der 3D-Koordinaten, verwendet werden.

Zur Bestimmung der 3D-Koordinaten des Objekts 1 können in einem ersten Meßdurchlauf die Positionen der Referenzmarken 8 erfaßt und gespeichert werden. Diese Positionen können dann in einem zweiten Meßdurchlauf zur Bestimmung der 3D-Koordinaten des Objekts 1 verwendet werden. Sie können in weiteren Meßdurchläufen zur Bestimmung der 3D-Koordinaten des Objekts 1 oder zur Bestimmung der 3D-Koordinaten weiterer Objekte verwendet werden.

## Patentansprüche

1. Verfahren zum Bestimmen der 3D-Koordinaten eines Objekts (1), bei dem
ein Streifenmuster (6) von einem Projektor (3) auf das Objekt (1) projiziert wird, das von dem Objekt (1) reflektierte Licht von einer Kamera (4) aufgenommen wird und die von der Kamera (4) aufgenommenen Aufnahmen ausgewertet werden,
und Referenzmarken (8) auf und/oder neben dem Objekt (1) von einer Referenzkamera (5) aufgenommen werden, die ein größeres Gesichtsfeld (9) als die Kamera (4) hat,
**dadurch gekennzeichnet,**
**daß** eine einzige Referenzkamera (5) mit der Kamera (4) oder mit einem 3D-Sensor (2) verbunden ist, der den Projektor (3) und die Kamera (4) umfaßt.

2. Verfahren nach Anspruch 1, **dadurch gekennzeichnet, daß** die Referenzmarken (8) auf das Objekt (1) projiziert werden.

3. Verfahren nach Anspruch 1 oder 2, **dadurch gekennzeichnet, daß** die Aufnahmen der Kamera (4) und die Aufnahmen der Referenzkamera (5) zeitlich versetzt erfolgen.

4. Verfahren nach einem der vorhergehenden Ansprüche, **dadurch gekennzeichnet, daß** die Aufnahmen der Kamera (4) und die Aufnahmen der Referenzkamera (5) gleichzeitig erfolgen.

5. Verfahren nach einem der vorhergehenden Ansprüche, **dadurch gekennzeichnet, daß** mehrere Aufnahmen der Kamera (4) zusammengesetzt werden.

6. Verfahren nach einem der vorhergehenden Ansprüche, **dadurch gekennzeichnet, daß** in einem ersten Meßdurchlauf die Positionen der Referenzmarken (8) erfaßt und gespeichert werden.

7. Verfahren nach einem der vorhergehenden Ansprüche, **dadurch gekennzeichnet, daß** die 3D-Koordinaten eines Objekts (1) auf der Grundlage von gespeicherten Positionen der Referenzmarken (8) bestimmt werden.

8. Vorrichtung zum Bestimmen der 3D-Koordinaten eines Objekts (1), insbesondere zur Durchführung des Verfahrens nach einem der vorhergehenden Ansprüche, mit einem Projektor (3) zum Projizieren eines Streifenmusters (6) auf das Objekt (1), einer Kamera (4) zum Aufnehmen des Objekts (1) und einer Auswerteeinrichtung zum Auswerten der Aufnahmen des Objekts (1) **gekennzeichnet durch**
eine einzige Referenzkamera (5) zum Aufnehmen von Referenzmarken (8) auf und/oder neben dem Objekt (1), die ein größeres Gesichtsfeld (9) als die Kamera (4) hat und die mit der Kamera (4) oder mit einem 3D-Sensor (2) verbunden ist, der den Projektor (3) und die Kamera (4) umfaßt.

9. Vorrichtung nach Anspruch 8, **gekennzeichnet durch** einen Projektor zum Projizieren der Referenzmarken (8) auf das Objekt (1).

## Claims

1. A method for determining the 3D coordinates of an object (1), in which
a stripe pattern (6) is projected onto the object (1) by a projector (3), the light reflected by the object (1) is captured by a camera (4), and the shots recorded by the camera (4) are evaluated,
and reference marks (8) on and/or beside the object (1) are recorded by a reference camera (5) which has a larger field of view (9) than the camera (4),
**characterized in**
**that** a single reference camera (5) is connected with the camera (4) or with a 3D sensor (2) which comprises the projector (3) and the camera (4).

2. The method according to claim 1, **characterized in that** the reference marks (8) are projected onto the object (1).

3. The method according to claim 1 or 2, **characterized in that** the shots of the camera (4) and the shots of the reference camera (5) are effected temporally offset.

4. The method according to any of the preceding claims, **characterized in that** the shots of the camera (4) and the shots of the reference camera (5) are effected at the same time.

5. The method according to any of the preceding claims, **characterized in that** several shots of the camera (4) are put together.

6. The method according to any of the preceding claims, **characterized in that** in a first measurement run the positions of the reference marks (8) are detected and stored.

7. The method according to any of the preceding claims, **characterized in that** the 3D coordinates of an object (1) are determined on the basis of stored positions of the reference marks (8).

8. An apparatus for determining the 3D coordinates of an object (1), in particular for carrying out the method according to any of the preceding claims, comprising a projector (3) for projecting a stripe pattern (6) onto the object (1), a camera (4) for recording the object (1) and an evaluating means for evaluating the shots of the object (1),
**characterized by**
a single reference camera (5) for recording reference marks (8) on and/or beside the object (1), which has a larger field of view (9) than the camera (4) and which is connected with the camera (4) or with a 3D sensor (2) which comprises the projector (3) and the camera (4).

9. The apparatus according to claim 8, **characterized by** a projector for projecting the reference marks (8) onto the object (1).

## Revendications

1. Procédé destiné à déterminer les coordonnées 3D d'un objet (1), dans lequel
un dessin rayé (6) est projeté sur l'objet (1) par un projecteur (3), la lumière réfléchie par l'objet (1) est capturée par une caméra (4) et les photos prises par la caméra (4) sont évaluées,
et des marques de référence (8) sur et/ou à côté de l'objet (1) sont capturées par une caméra de référence (5), qui possède un champ de vision (9) plus grand que la caméra (4),
**caractérisé en ce que**
une seule caméra de référence (5) est reliée à la caméra (4) ou à un capteur 3D (2), qui comporte le projecteur (3) and la caméra (4).

2. Procédé selon la revendication (1), **caractérisé en ce que** les marques de référence (8) sont projetées sur l'objet (1).

3. Procédé selon la revendication 1 ou 2, **caractérisé en ce que** les prises de vue de la caméra (4) et les prises de vue de la caméra de référence (5) sont effectuées avec un décalage temporel.

4. Procédé selon l'une quelconque des revendications précédentes, **caractérisé en ce que** les prises de vue de la caméra (4) et les prises de vue de la caméra de référence (5) sont effectuées en même temps.

5. Procédé selon l'une quelconque des revendications précédentes, **caractérisé en ce que** plusieurs prises de vue de la caméra (4) sont assemblées.

6. Procédé selon l'une quelconque des revendications précédentes, **caractérisé en ce que** dans un premier cycle de mesure les positions des marques de référence (8) sont détectées et mémorisées.

7. Procédé selon l'une quelconque des revendications précédentes, **caractérisé en ce que** les coordonnées 3D d'un objet (1) sont déterminées sur la base de positions mémorisées des marques de référence (8).

8. Dispositif destiné à déterminer les coordonnées 3D d'un objet (1), en particulier pour la mise en oeuvre du procédé selon l'une quelconque des revendications précédentes, comportant un projecteur (3) pour projeter un dessin rayé (6) sur l'objet (1), une caméra (4) pour capturer l'objet (1) et un dispositif d'évaluation pour évaluer les prises de vue de l'objet (1),
**caractérisé par**
une seule caméra de référence (5) pour capturer des marques de références (8) sur et/ou à côté de l'objet (1), qui possède un champ de vision (9) plus grand que la caméra (4) et qui est relié à la caméra (4) ou à un capteur 3D (2), qui comporte le projecteur (3) et la caméra (4).

9. Dispositif selon la revendication 8, **caractérisé par** un projecteur destiné à projeter des marques de référence (8) sur l'objet (1).
